# FASCICULE DE BREVET EUROPEEN

(11) **EP 2 740 125 B1**
(45) Date de publication et mention de la délivrance du brevet: **14.09.2016**
(21) Numéro de dépôt: 12758524.8
(22) Date de dépôt: 27.07.2012
(51) Int. Cl.: G21B 1/13, B23K 20/233, B23K 35/00

(54) **COMPOSANT DE PREMIÈRE PAROI POUR RÉACTEUR DE FUSION NUCLÉAIRE ET SON PROCÉDÉ DE RÉALISATION**
PRIMÄRWANDKOMPONENTE EINES KERNFUSIONSREAKTORS UND HERSTELLUNGSVERFAHREN DAFÜR
NUCLEAR FUSION REACTOR FIRST WALL COMPONENT AND PRODUCTION PROCESS THEREOF

(30) Priorité: 01.08.2011 FR 1102406
(43) Date de publication de la demande: 11.06.2014
(73) Titulaire: Commissariat à l'Énergie Atomique et aux Énergies Alternatives, 75015 Paris (FR)
(72) Inventeur: FRAYSSINES Pierre-Eric, F- 38600 Fontaine (FR); BUCCI Philippe, F-38360 Engins (FR); LEIBOLD Jean-Marc, F-38800 Pont de Claix (FR); RIGAL Emmanuel, F-38360 Sassenage (FR)
(74) Mandataire: Talbot, Alexandre
(86) Numéro de dépôt international: PCT/FR2012/000317
(87) Numéro de publication internationale: WO 2013/017749

(56) Documents cités:
- EP-A1- 0 856 374
- EP-A1- 0 901 869
- EP-A1- 0 934 798
- EP-A2- 1 043 111

## Description

### Domaine technique de l'invention

L'invention est relative à un composant de première paroi pour réacteur de fusion nucléaire muni d'un empilement comprenant successivement :
- un élément en alliage de cuivre,
- une couche intercalaire métallique et
- un élément en béryllium, directement en contact avec la couche intercalaire métallique.

L'invention concerne également un procédé de réalisation d'un tel composant.

### État de la technique

Pour les réacteurs de fusion nucléaire et notamment pour le futur réacteur à fusion thermonucléaire ITER (« International Thermonuclear Experimental Reactor » ou « réacteur thermonucléaire expérimental international »), la chambre à vide du réacteur est recouverte par des composants de première paroi qui sont directement en regard du plasma. Leur rôle est de protéger du rayonnement thermique et du flux neutronique le personnel travaillant sur le site et les installations nucléaires entourant la chambre à vide du réacteur.

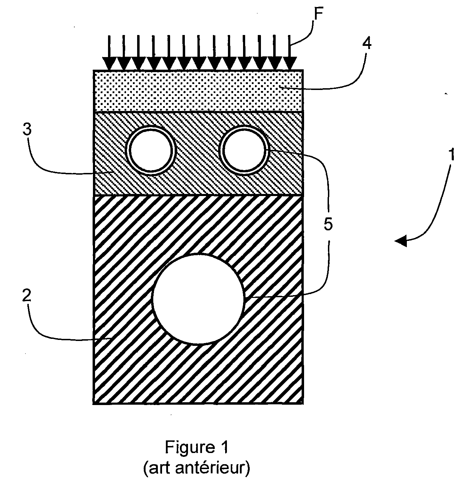

La figure 1 illustre un schéma de principe d'un composant de première paroi 1. Il est constitué par un assemblage de trois éléments différents :
- un élément en acier inoxydable 2, en particulier de type 316LN
- un élément en alliage de cuivre 3, tel que l'alliage CuCrZr, faisant office de puits de chaleur
- et un élément en béryllium 4, destiné à être directement en regard des rayonnements thermiques et des neutrons émis par le plasma (flèches F) et jouant le rôle de bouclier.

Les matériaux constituant ces trois éléments sont tous, à l'exception du béryllium activement refroidis par de l'eau pressurisée circulant dans des tubes de refroidissement 5 ménagés au sein des éléments en acier inoxydable 2 et en alliage de cuivre 3.

L'assemblage de ces matériaux peut être réalisé par plusieurs techniques parmi lesquelles on peut citer la technique de soudage diffusion assisté par pressage uniaxial ou par Compression Isostatique à Chaud (CIC). Cette dernière est en général la plus utilisée. Le soudage par diffusion permet de souder l'intégralité des surfaces en contact par application simultanée d'une haute pression et d'une haute température pendant un temps donné. Cette technique de soudage est un soudage à l'état solide car la température de soudage est inférieure à la température de fusion des matériaux à assembler.

Ainsi, la réalisation d'un composant de première paroi pour réacteur de fusion nucléaire comporte classiquement une étape de soudage diffusion assisté par CIC de l'élément en acier inoxydable 2 avec l'élément en alliage de cuivre 3 muni des tubes de refroidissement 5. Dans le cas d'un alliage en CuCrZr, cette étape est suivie d'une étape de traitement thermique se terminant par une trempe à l'eau ou au gaz, afin de remettre en solution les précipités de chrome et de zirconium dans l'alliage de cuivre 3 et obtenir une solution solide sursaturée. Enfin, la dernière étape consiste à assembler par soudage diffusion assisté par CIC l'élément en béryllium 4 avec l'élément en alliage de cuivre 3.

L'étape d'assemblage entre l'élément en béryllium 4 et l'élément en alliage de cuivre 3 reste une étape délicate dans le procédé de réalisation d'un composant de première paroi. En effet, la jonction entre le béryllium et l'alliage en cuivre (Be/alliage de Cu) peut présenter un comportement mécanique insuffisant dans le domaine d'application des composants de première paroi pour réacteur de fusion nucléaire et ce pour plusieurs raisons:
- le béryllium et le cuivre réagissent entre eux dès 400°C pour former des composés intermétalliques. Ces composés intermétalliques fragilisent la jonction entre le béryllium et l'alliage en cuivre et peuvent conduire à sa rupture lors de l'usinage final ou bien de manière prématurée, lors de tests destinés à tester son comportement mécanique.
- le béryllium possède à sa surface une couche d'oxyde très stable thermiquement qui peut freiner la diffusion à l'interface béryllium-alliage de cuivre et donc dégrader la qualité de l'assemblage soudé diffusé.
- le béryllium et l'alliage de cuivre sont des matériaux qui possèdent des coefficients de dilatation thermique et des modules de Young différents, ce qui provoque l'apparition de contraintes résiduelles d'élaboration à l'interface.

Pour améliorer l'assemblage et le comportement mécanique de la jonction Be/alliage de Cu, de nombreuses études proposent de réaliser le soudage par diffusion entre ces deux éléments en interposant, avant l'assemblage, une ou plusieurs couches entre l'élément en béryllium 4 et l'élément en alliage de cuivre 3. Ces couches ont diverses fonctionnalités. Certaines couches peuvent être destinées à réduire les contraintes mécaniques d'assemblage (« compliant layer » en anglais ou par abus de langage couche « compliante ») et éventuellement à promouvoir la liaison entre le béryllium et l'alliage de cuivre. D'autres peuvent aussi agir comme des barrières de diffusion.

À titre d'exemple, T. Kuroda et al. dans l'article « Development of joining technology for Be/Cu-alloy and Be/SS by HIP » (Journal of Nuclear Materials 258-263 (1998) 258-264) ont testé l'emploi de différentes couches intercalaires destinées à jouer le rôle de barrière de diffusion. De nombreux constituants ont été testés pour ces couches intercalaires. En particulier, les tests ont porté soit sur des monocouches métalliques (Al, Ag, OF-Cu ou cuivre exempt d'oxygène, BeCu, Ti, Cr, Si, Mo) disposées entre l'élément en béryllium (Be) et un élément en alliage de cuivre (DSCu ou cuivre renforcé par une dispersion d'alumine), soit sur des multicouches réalisées par un empilement successif de monocouches (Ti/Ni, Ti/Ni/Cu, Al/Ti/Cu, Al/Ni/Cu, Al/Mo/Cu et Cr/Cu) disposées entre l'élément en Be et l'élément en DSCu. Les couches sont formées soit par dépôt, dépôt physique en phase vapeur ou dépôt électrolytique, soit en utilisant des feuillards de faible épaisseur (50µm).

À l'exception de l'argent, qui ne peut être employé dans l'industrie nucléaire car il s'active sous bombardement neutronique, les autres éléments utilisés comme barrière de diffusion provoquent, généralement la formation d'oxydes très stables en température (Al₂O₃, Cr₂O₃, SiO₂, TiO₂). Or, la formation de ces oxydes à la surface des couches barrières peut limiter le processus de diffusion et de ce fait réduire la tenue mécanique de l'assemblage Be/barrière de diffusion/alliage de cuivre.

Pour empêcher la formation de ces oxydes, les couches barrières citées précédemment peuvent en général être recouvertes sous vide par d'autres couches métalliques ayant une plus grande affinité avec l'alliage de cuivre, tout en formant des oxydes moins résistants en température. Ces couches sont en général en cuivre pur ou en nickel pur. À titre d'exemple, elles sont appelées couches promotrices de liaison (« bonding promotion layer ») dans le brevet US6164524, car elles favorisent l'assemblage des couches barrières citées précédemment sur l'alliage de cuivre. En général déposées par dépôt physique en phase vapeur sous forme de métal à l'état pur, ces couches ont aussi pour fonction d'être des couches « compliantes » (ou couches réductrices des contraintes mécaniques), car le cuivre comme le nickel pur présentent une faible limite élastique et une grande ductilité. Ainsi, en plus de favoriser l'assemblage lors de l'opération de soudage par diffusion, elles permettent aussi de limiter l'apparition de contraintes à la jonction Be/alliage de cuivre une fois celle-ci réalisée en se déformant plastiquement.

Dans le brevet US6164524, il a ainsi été proposé de réaliser un corps assemblé par compression isostatique à chaud avec un élément en béryllium et un élément en alliage de cuivre, à l'aide d'une couche mince jouant le rôle de barrière de diffusion. La couche barrière est formée sur l'élément en béryllium, avant que celui-ci ne soit assemblé avec l'élément en alliage de cuivre par compression isostatique à chaud, la couche barrière de diffusion étant disposée entre les deux éléments. La couche barrière de diffusion est, de plus, constituée par un métal tel le titane, le chrome, le molybdène ou le silicium. L'épaisseur d'une telle couche varie en fonction du métal utilisé. Par ailleurs, le corps assemblé peut aussi comprendre :
- une couche de relaxation des contraintes en aluminium disposée entre la couche barrière de diffusion et l'élément en béryllium, avec une épaisseur comprise entre 5µm et 2,5mm.
- et/ou une couche promotrice de liaison en cuivre pur ou en nickel pur entre la couche barrière de diffusion et l'élément en alliage de cuivre, d'une épaisseur comprise entre 5µm et 500µm.

Le procédé d'assemblage est de plus réalisé à une température comprise entre 400°C et 650°C et à une pression comprise entre 20MPa et 300MPa.

Le brevet EP0901869 décrit un matériau composite comportant une couche de béryllium, une couche en alliage de cuivre et une couche en acier inoxydable. Une couche additionnelle, par exemple en niobium, est insérée entre la couche de béryllium et la couche en alliage de cuivre. Les différentes couches acier inoxydable-alliage de cuivre-niobium-béryllium sont assemblées simultanément par pressage à chaud.

Pour connaître les améliorations apportées par l'utilisation de ces différentes couches (barrières de diffusion, promotrices de liaison et/ou « compliantes »), des tests de cisaillement et des tests de corrosion ou encore des essais en fatigue thermique, représentatifs des sollicitations d'un composant de première paroi d'un réacteur de fusion, ont été conduits par le passé sur certains assemblages entre un élément en Be et un élément en alliage de Cu.

Cependant, les résultats de ces essais sont difficilement exploitables et comparables entre eux car, bien souvent, les maquettes de tests ont des dimensions et des conditions de refroidissement peu connues et/ou différentes. Or, les conditions de refroidissement d'une jonction soumise à un flux de chaleur transitoire de haute intensité influent beaucoup sur son comportement en fatigue thermique. Il est, par conséquent, difficile d'apprécier l'amélioration apportée par les assemblages réalisés dans la littérature comparé à une jonction de référence Be/alliage de Cu, avec ou sans couche « compliante » pour des utilisations de composant de première paroi d'un réacteur de fusion.

### Objet de l'invention

L'objet de l'invention a pour but de proposer et de réaliser un composant de première paroi adapté pour un réacteur de fusion nucléaire et présentant, en particulier, un comportement en fatigue thermique amélioré notamment par rapport à une jonction de référence, tout en évitant la présence de composés intermétalliques et en limitant les contraintes mécaniques de la structure.

On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente schématiquement et en coupe un composant de première paroi pour réacteur de fusion nucléaire selon l'art antérieur.
- les figures 2 à 4 représentent schématiquement et en coupe différentes étapes de réalisation d'un premier mode particulier de réalisation d'un composant de première paroi pour réacteur de fusion nucléaire selon l'invention.
- les figures 5 à 7 représentent schématiquement et en coupe différentes étapes de réalisation d'un second mode particulier de réalisation d'un composant de première paroi pour réacteur de fusion nucléaire selon l'invention.
- la figure 8 représente graphiquement un premier exemple de cycle de soudage diffusion assisté par CIC pour assembler l'élément en béryllium avec l'élément en alliage de cuivre d'un composant selon les premier et second modes de réalisation.
- la figure 9 représente graphiquement un second exemple de cycle de soudage diffusion par CIC pour assembler l'élément en béryllium avec l'élément en alliage de cuivre d'un composant selon les premier et second modes de réalisation.
- les figures 10 et 11 représentent schématiquement et en coupe différentes étapes de réalisation d'un troisième mode particulier de réalisation d'un composant de première paroi pour réacteur de fusion nucléaire selon l'invention.
- la figure 12 est un cliché obtenu par Microscopie Electronique à Balayage (MEB) par analyse dispersive en énergie de rayons X (EDS ou EDX en anglais) de la jonction entre le béryllium et le cuivre pour un composant réalisé selon le troisième mode de réalisation.
- la figure 13 représente en coupe une maquette de référence utilisée pour des tests en cyclage thermique.

### Description de modes préférentiels de l'invention

Il est proposé de réaliser la jonction entre l'élément en béryllium et l'élément en alliage de cuivre d'un composant de première paroi pour réacteur de fusion nucléaire, à l'aide d'une couche intercalaire en niobium comme couche barrière de diffusion. Ainsi, une fois l'assemblage réalisé, la jonction entre l'élément en béryllium et l'élément en alliage de cuivre comprend outre ces deux éléments une couche intercalaire en niobium, directement en contact avec l'élément en béryllium.

Le fait de choisir le niobium comme métal pour constituer la couche intercalaire métallique destinée à être directement en contact avec l'élément en béryllium permet d'obtenir une jonction dont la tenue en fatigue thermique convient à une utilisation comme composant de première paroi pour réacteur de fusion nucléaire et plus particulièrement améliorée par rapport à une jonction de référence (Be/Cupᵤᵣ/Alliage de Cu). En effet, le niobium est un métal présentant de bonnes capacités de soudabilité avec le cuivre. Il est, de plus, compatible métallurgiquement avec le béryllium et le cuivre. Il ne forme pas de composés intermétalliques fragiles, tels que les composés BeCu, Be₂Cu, qui apparaissent en général lorsqu'un assemblage entre un élément en béryllium et un alliage de Cu est réalisé comme dans le cas de la jonction de référence.

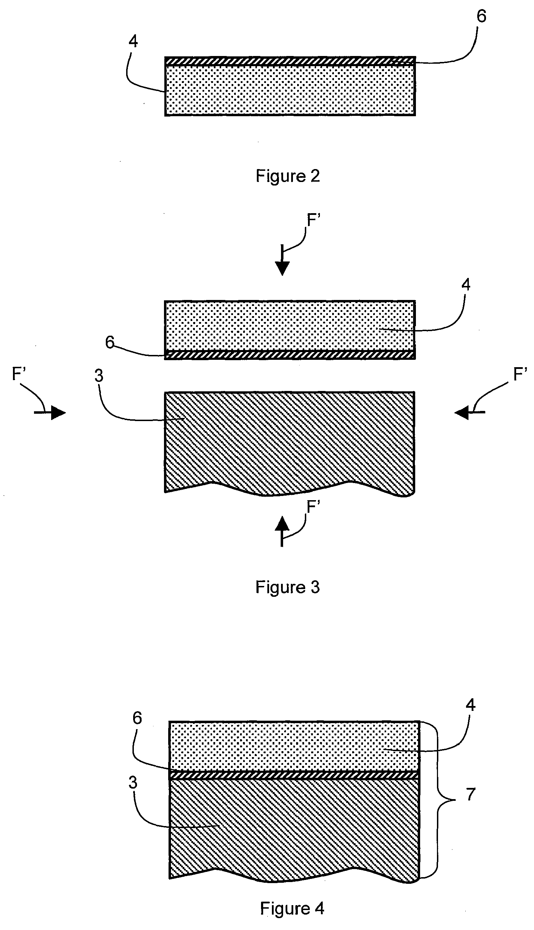

Les figures 2 à 4 illustrent un exemple de réalisation d'un composant de première paroi pour réacteur de fusion nucléaire.

Sur la figure 2, la couche intercalaire en niobium 6 est formée directement sur une surface libre de l'élément en béryllium 4, afin d'être directement en contact avec l'élément en béryllium 4. La couche intercalaire en niobium 6 présente avantageusement une épaisseur comprise entre 1µm et 20µm et avantageusement entre 1µm et 5µm. Cette étape de formation peut être réalisée par tout type de moyens, tels que le dépôt physique en phase vapeur (PVD), l'évaporation sous vide, la projection plasma ou le dépôt électrolytique. Cependant, elle est, de manière préférentielle, réalisée par dépôt PVD. De plus, la surface libre de l'élément en béryllium 4 destinée à recevoir la couche intercalaire en niobium 6 est si nécessaire nettoyée avant la formation de la couche intercalaire en niobium 6. Ceci peut être obtenu par une opération de dégraissage et de désoxydation classique, telle qu'une attaque chimique, mais aussi par des techniques de nettoyage associées aux procédés de dépôt, comme le bombardement ionique pour le dépôt PVD.

Ensuite, comme illustré sur la figure 3, l'empilement constitué par la couche intercalaire en niobium 6 et l'élément en béryllium 4 est alors mis en regard de l'élément en alliage de cuivre 3, puis les deux ensembles sont assemblés par soudage diffusion assisté par compression isostatique à chaud (symbolisé par les flèches F' sur la figure 3). L'opération d'assemblage par soudage diffusion assisté par CIC permet d'obtenir un empilement 7 formé successivement par :
- l'élément en alliage de cuivre 4,
- la couche intercalaire en niobium 6,
- et l'élément en alliage de cuivre 3.

Cet empilement 7 est aussi noté Be/Nb/Alliage de cuivre et il est illustré sur la figure 4. Ce premier mode de réalisation est particulièrement avantageux pour des composants de petites tailles.

Le fait de disposer la couche intercalaire métallique en niobium 6 directement en contact avec l'élément en alliage de cuivre 3 est particulièrement avantageux pour des composants de petite taille.

Néanmoins, dans certains cas et notamment pour des composants de plus grande taille, la couche intercalaire en niobium 6 peut être avantageusement associée à une couche réductrice des contraintes mécaniques (ou couche « compliante »), constituée par un métal choisi parmi le cuivre ou le nickel. réductrice des contraintes est en cuivre pur ou en nickel pur, i.e. contenant au moins 99,95% de cuivre ou de nickel. Le cuivre pur est aussi appelé Cuc1.

Cette couche réductrice des contraintes mécaniques est, en particulier, disposée entre la couche intercalaire en niobium 6 et l'élément en alliage de cuivre 3. Son rôle est de limiter les contraintes mécaniques liées à l'assemblage entre l'élément en béryllium et l'élément en alliage de cuivre. Elle peut aussi avoir pour fonction de favoriser la liaison, lors de l'assemblage des éléments en béryllium et en alliage de cuivre par soudage diffusion.

Les propriétés mécaniques et thermiques des 3 métaux susceptibles d'être utilisés pour former la couche « compliante » sont données à titre d'illustration dans le tableau 1 ci-dessous :

**Tableau 1**

| **Matériau** | **T° Fusion (°C)** | **Conductivité thermique W/mK (à 20°C)** | **Propriétés mécaniques à 20°C** | | |
|---|---|---|---|---|---|
| | | | **R0,2 (MPa)** | **Rm(MPa)** | **A rupture (%)** |
| Cu | 1084 | 397 | 78 | 212 | 56 |
| Ni | 1455 | 88,5 | 60 | 310 | 40 |

Pour le cuivre et le nickel, la couche réductrice des contraintes mécaniques 8 est en particulier directement mise en contact avec l'élément en alliage de cuivre.

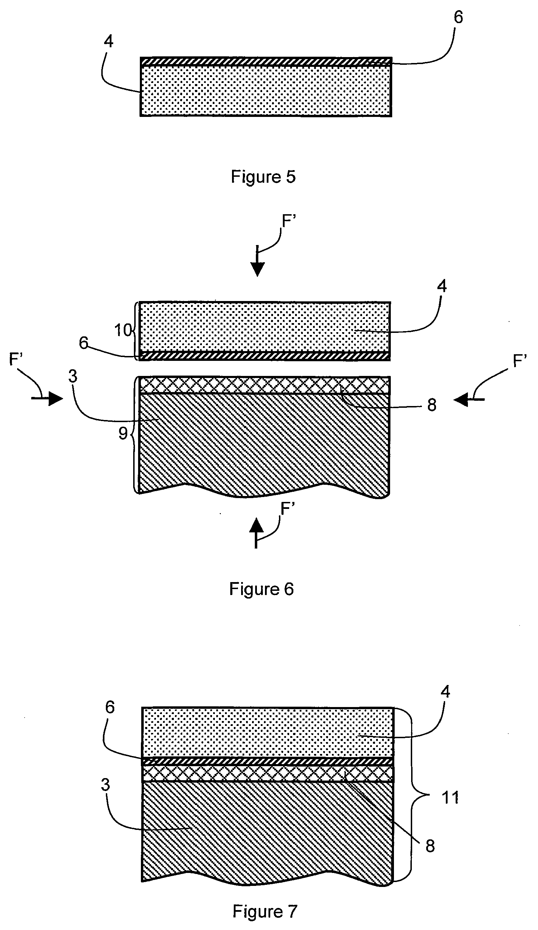

Les figures 5 à 7 illustrent un second exemple de réalisation d'un composant de première paroi pour réacteur de fusion nucléaire utilisant une couche réductrice des contraintes mécaniques 8.

Sur la figure 5, la couche intercalaire en niobium 6 est formée directement sur une surface libre de l'élément en béryllium 4, afin d'être directement en contact avec l'élément en béryllium 4. La couche intercalaire en niobium 6 présente avantageusement une épaisseur comprise entre 1µm et 20µm et avantageusement entre 1µm et 5µm. Comme dans le mode de réalisation précédent, cette étape de formation peut être réalisée par tout type de moyens. Cependant, elle est, de manière préférentielle, réalisée par dépôt PVD. De plus, la surface libre de l'élément en béryllium 4 destinée à recevoir la couche intercalaire en niobium 6 est si nécessaire nettoyée avant la formation de la couche intercalaire en niobium 6.

Ensuite, comme illustré sur la figure 6, une couche réductrice des contraintes mécaniques 8 (aussi appelée couche « compliante »), par exemple en cuivre pur tel qu'un cuivre exempt d'oxygène et à haute conductivité connu, sous le sigle CuC1 ou Cu-OF (« Oxygen free high conductivity »), est disposée entre la couche intercalaire en niobium 6 et l'élément en alliage de cuivre 3.

La mise en place de la couche réductrice des contraintes mécaniques 8 peut, par exemple, être réalisée en interposant ladite couche 8 entre les éléments en alliage de cuivre 3 et en béryllium 4, de sorte que la couche intercalaire en niobium 6 soit disposée en regard de la couche réductrice des contraintes mécaniques 8.

En particulier, sur la figure 6, la couche réductrice des contraintes mécaniques 8 est posée sur l'élément en alliage de cuivre 3 et l'ensemble forme un premier empilement 9. Le second empilement 10, constitué par la couche intercalaire en niobium 6 et l'élément en béryllium 4, est alors mis en regard du premier empilement 9, puis les premier et second empilements 9 et 10 sont assemblés par soudage diffusion assisté par compression isostatique à chaud (symbolisé par les flèches F' sur la figure 6). Dans ce cas, l'étape d'assemblage permet en une seule opération de solidariser la couche réductrice des contraintes mécaniques 8, non seulement à l'élément en alliage de cuivre 3 mais aussi à la couche intercalaire en niobium 6 du second empilement 10.

Selon une alternative, la couche réductrice des contraintes mécaniques 8 pourrait aussi être directement formée et donc assemblée sur l'élément en alliage de cuivre 3, avant de réaliser l'opération de soudage diffusion par CIC des empilements 9 et 10. Le soudage par diffusion permettrait alors de solidariser la couche intercalaire en niobium 6 à la couche réductrice des contraintes mécaniques 8 alors déjà solidaire de l'élément en alliage de cuivre 3.

Dans les deux cas, l'opération d'assemblage par soudage diffusion par CIC permet d'obtenir un empilement 11 formé successivement par :
- l'élément en béryllium 4,
- la couche intercalaire en niobium 6,
- la couche réductrice des contraintes mécaniques 8,
- et l'élément en alliage de cuivre 3.

Cet empilement 11 est aussi noté Be/Nb/Cuₚᵤᵣ/Alliage de cuivre et il est illustré sur la figure 7.

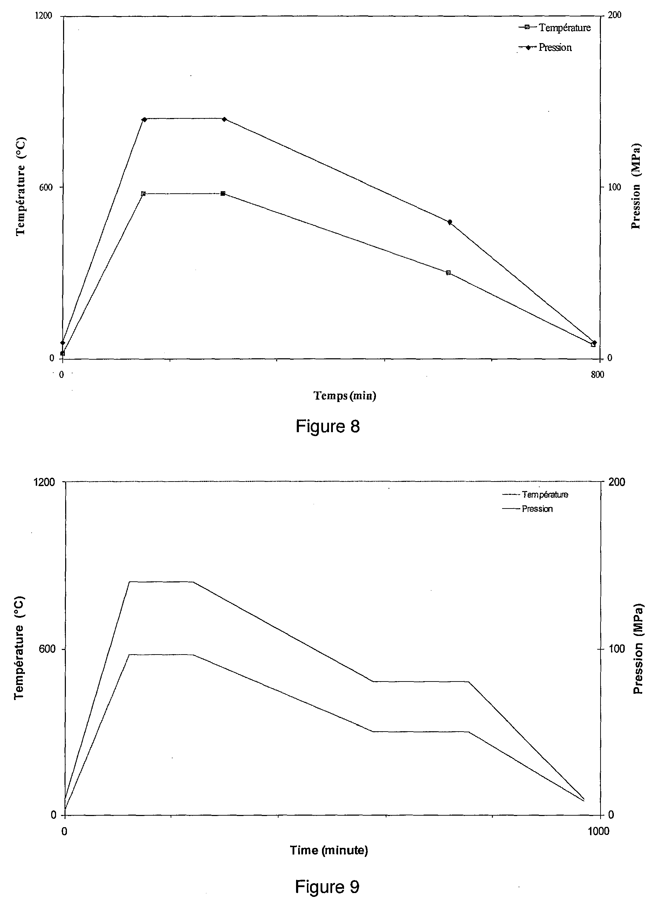

Les figures 8 et 9 représentent graphiquement deux exemples de cycle de soudage diffusion assisté par CIC susceptibles d'être utilisés pour réaliser l'assemblage de l'élément en béryllium 4 avec l'élément en alliage de cuivre 3.

Sur ces deux exemples de cycles, les vitesses de montée en température et en pression sont identiques. Elles sont de l'ordre de 280°C/h et de 70Bar/h sur les figures 8 et 9, même si elles pourraient être respectivement différentes selon la puissance de l'enceinte de CIC et la taille du composant à fabriquer. Le palier de soudage par diffusion se fait dans les deux cas à 580°C sous 140MPa pendant 2 heures. La vitesse de refroidissement, depuis 580°C jusqu'à la température ambiante, est de plus contrôlée, pour limiter l'importance des contraintes résiduelles d'assemblage à la jonction béryllium/cuivre. Cette dernière est classiquement de quelques dizaines de °C/h, mais des vitesses plus importantes peuvent être atteintes sans affecter la tenue mécanique de la jonction. Enfin, sur la figure 9, un palier de détensionnement est ajouté pendant la phase de refroidissement pour réduire encore l'importance des contraintes mécaniques à la jonction. L'alliage de cuivre constituant l'élément 3 est, avantageusement, l'alliage CuCrZr, tandis que la couche réductrice des contraintes mécaniques 8 peut être avantageusement constituée par du Cu-OF. La couche réductrice des contraintes mécaniques 8 peut aussi être en nickel pur. Elle a, de plus, en général une épaisseur comprise entre quelques centaines de micromètres et quelques millimètres et plus particulièrement entre 100µm et 4000µm.

Bien entendu, le composant de première paroi pour réacteur de fusion nucléaire peut aussi comporter un élément en acier inoxydable austénitique, par exemple de type 316LN, tel que celui représenté sur la figure 1, préalablement assemblé avec l'élément en alliage de cuivre 3 grâce à un cycle de soudage par diffusion.

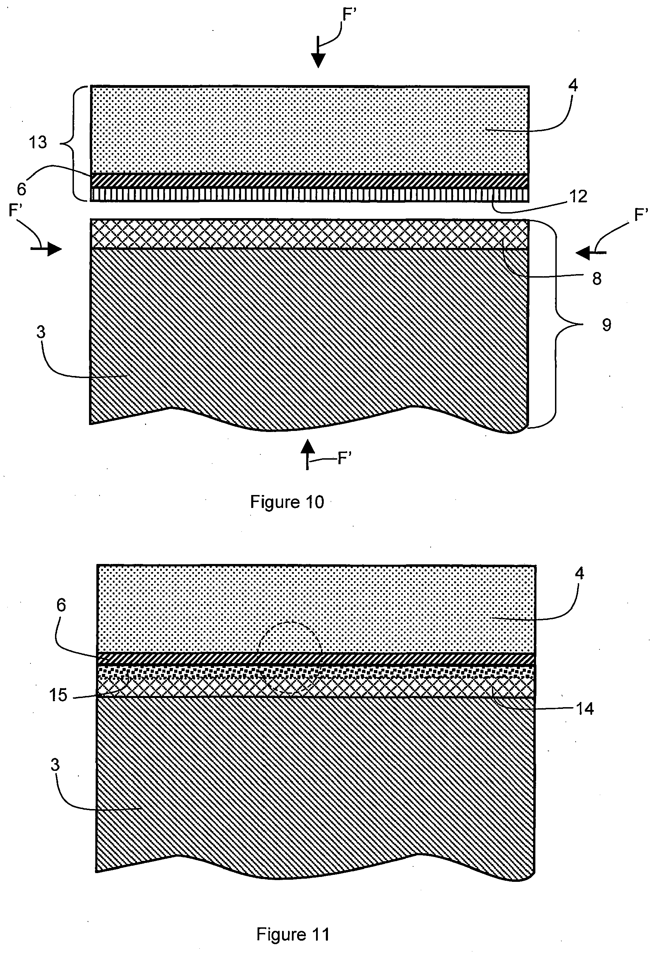

Dans le mode de réalisation de l'invention, lorsque la couche réductrice des contraintes mécaniques 8 est en cuivre pur, et comme illustré aux figures 10 à 11, il peut être avantageux d'utiliser une couche en nickel pur 12 pour réaliser l'assemblage.

La couche en nickel pur 12 est, alors, avantageusement formée directement sur la couche intercalaire en niobium 6, avant l'étape d'assemblage de l'élément en béryllium 4 avec l'élément en alliage de cuivre 3. La couche en nickel pur 12 présente, avantageusement, une épaisseur comprise entre 0,1µm et 10µm et avantageusement entre 0,1 et 5µm.

De plus, comme pour la couche intercalaire en niobium 6, cette étape de formation de la couche en nickel pur 12 peut être réalisée par tout type de moyens, tels que le dépôt PVD, évaporation sous vide, projection plasma, dépôt électrolytique. Elle est, avantageusement, réalisée par dépôt PVD. Enfin, la surface libre de la couche intercalaire en niobium 6 destinée à recevoir la couche en nickel pur 12 est de préférence, préalablement désoxydée.

Ce mode de réalisation est en particulier avantageux lorsque l'assemblage comporte une couche « compliante » en cuivre pur, car le nickel pur assure une protection contre l'oxydation de la surface de niobium, avant l'assemblage, ce qui permet d'éviter la présence d'oxydes à l'interface avec le cuivre. Il facilite aussi l'opération de soudage diffusion assisté par CIC entre le niobium et le cuivre.

Une fois, la couche en nickel pur 12 formée directement sur la couche intercalaire en niobium 6, l'empilement 13, constitué par ces deux couches 12 et 6 et l'élément en béryllium 4, est disposé en face de l'empilement 9 constitué par l'élément en alliage de cuivre 3 et la couche réductrice des contraintes mécaniques 8 en cuivre pur. Cette mise en place est réalisée de sorte que la couche en nickel pur 12 soit disposée face à la couche en cuivre pur 8. Une opération de soudage par diffusion assisté par CIC est alors réalisée pour assembler les deux empilements 13 et 9 (flèches F' sur la figure 10). Celle-ci provoque alors la diffusion du nickel pur dans une partie superficielle de la couche « compliante » en cuivre pur 8.

Comme représenté sur la figure 11, l'opération d'assemblage par soudage diffusion assisté par CIC permet alors d'obtenir un empilement formé successivement par :
- l'élément en béryllium 4,
- la couche intercalaire en niobium 6,
- une couche intercalaire additionnelle 15 en alliage de cuivre et de nickel, interposée entre la couche intercalaire en niobium 6 et la couche « compliante » en cuivre 14,
- une couche réductrice des contraintes mécaniques (« ou compliante ») en cuivre pur 14, en contact direct avec l'élément en alliage de cuivre 3
- et l'élément en alliage de cuivre 3.

Cet empilement est aussi noté Be/Nb/CuNi/Cuₚᵤᵣ/Alliage de cuivre.

La couche « compliante » en cuivre pur, notée 14 sur la figure 11, correspond alors à la partie résultante de la couche en cuivre pur 8 dans laquelle le nickel n'a pas diffusé pendant l'opération de soudage par diffusion assisté par CIC. Elle est en contact direct avec l'élément en alliage de cuivre 3 et elle est prolongée par la couche intercalaire additionnelle 15 en alliage de cuivre et de nickel.

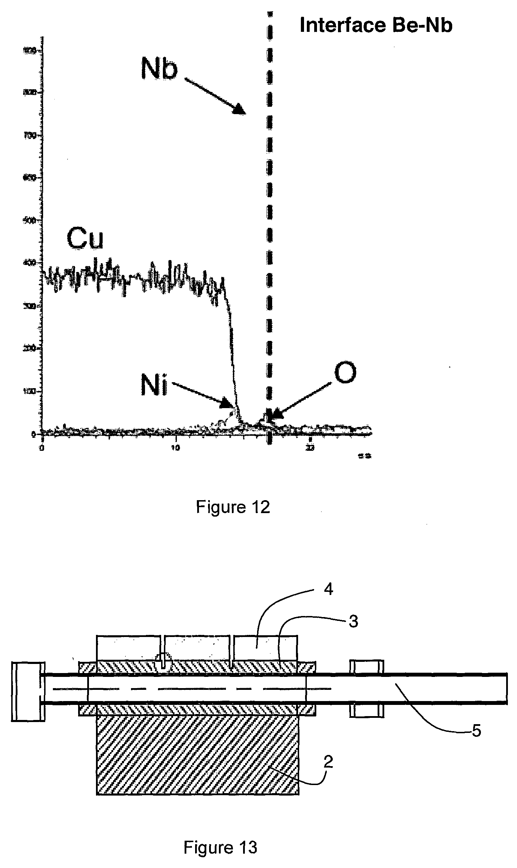

La diffusion du nickel dans la couche en cuivre pur 8 suite à l'opération de soudage par diffusion assisté par CIC a été confirmée par observation par microscopie électronique à balayage d'un échantillon réalisé selon ce second mode de réalisation et par analyse EDS comme rapporté sur la figure 12.

Deux maquettes A et B, représentatives d'un composant de première paroi, avec respectivement une jonction Be/Nb/CuNi/Cuₚᵤᵣ/CuCrZr et une jonction de référence Be/Cuₚᵤᵣ/CuCrZr ont été réalisées de manière identiques et soumises à des tests de fatigue thermique.

Les maquettes comprennent chacune 9 tuiles de béryllium ayant les dimensions suivantes 30,6x27,3x9mm. À titre d'exemple, une maquette de référence (Be/Cuₚᵤᵣ/CuCrZr) est illustrée en coupe sur la figure 13.

Les maquettes sont plus particulièrement réalisées de la manière suivante :
1- soudage par diffusion du CuCrZr sur un socle en acier inoxydable 316LN. Cet assemblage se réalise à haute température en appliquant pendant 2h une pression de 140MPa à une température de 1040°C.
2- cycle de traitement thermique pour obtenir une solution solide sursaturée en Cr et en Zr dans la matrice de cuivre. Le cycle de traitement thermique est effectué à 980°C sous vide pendant 1 h. A la fin du palier de température, une trempe au gaz à une vitesse supérieure à 60°C/min est réalisée.
3- assemblage des tuiles de béryllium sur le CuCrZr en interposant, pour les deux maquettes, une couche « compliante » en cuivre pur de même épaisseur entre les deux matériaux Be et CuCrZr.

Pour la maquette A, deux couches respectivement en niobium et en nickel pur ont été successivement déposées par PVD sur l'élément en béryllium, avant la réalisation de l'étape 3. Ces couches ont respectivement des épaisseurs de l'ordre de 3µm et 0,3µm.

Le refroidissement de ces maquettes est assuré par une circulation d'eau pressurisée dans 4 tubes en acier inoxydable, notés 5 sur la figure 13, de 12mm de diamètre extérieur et de 1 mm de paroi et traversant l'élément en CuCrZr 3. L'entrée et la sortie de l'eau se fait sur le même côté des maquettes et sa circulation dans chacun des tubes 5 est assurée par un système de boîte à eau mettant en relation les tubes 2 x 2. Le débit d'eau est de 24l/min (soit 5m/s) et sa température est celle de la température ambiante.

Ces deux maquettes A et B sont alors soumises au même test de fatigue thermique. Celui-ci consiste à bombarder la surface en béryllium des maquettes A et B par un faisceau d'électrons de haute énergie. Le bombardement électronique transitoire induit des montées et des descentes brutales en température, ce qui permet de cycler thermiquement les matériaux et les jonctions. Durant les tests, la durée de la phase de montée et de descente en température sont de 40s chacune. Les tests commencent par un balayage rapide de la surface des maquettes pour des densités de puissance croissantes de 0,5 à 1,5 MW/m². Ensuite, chaque maquette subit :
- 1000 cycles à 1,5 MW/m²
- puis 200 cycles à 2 MW/m²
- puis 200 cycles à 2,5 MW/m²
- puis 200 cycles à 2,7 MW/m²
- puis 200 cycles à 3 MW/m².

La puissance croit alors par palier de 0,2 MW/m² tous les 200 cycles jusqu'à rupture de la jonction entre le béryllium et le cuivre.

Le tableau 2 ci-dessous rapporte les essais successifs réalisés sur les deux maquettes A et B :

**Tableau 2**

| | | | | | | | |
|---|---|---|---|---|---|---|---|
| **Puissance** (MW/m²) | **1,5** | **2** | **2,5** | **2,75** | **3** | **3,2** | **3,4** |
| **Nbre de cycles Maquette A** | 1000 | 200 | 200 | 200 | 200 | 200 | 180 |
| **Nbre de cycles Maquette B** | 1000 | 200 | 200 | 200 | 200 | - | - |

Au cours de cet essai, il a ainsi été constaté que la maquette A correspondant à la jonction Be/Nb/CuNi/Cuₚᵤᵣ/CuCrZr a résisté jusqu'à 180cycles pour une puissance de 3,4 MW/m², alors que la maquette B, correspondant à la jonction de référence Be/Cuₚᵤᵣ/CuCrZr, a présenté des signes de rupture à la jonction de référence dès 200 cycles pour une puissance de 2,75 MW/m² et que ladite jonction de référence a cédé après 200 cycles à 3MW/m².

À titre de comparaison, des essais complémentaires ont été réalisés en fabriquant quatre nouvelles maquettes C, D, E et F. Les trois premières maquettes C à E ont une structure identique à la maquette A à l'exception du métal constituant la couche intercalaire (en niobium pour la maquette A et respectivement en Si, Ti et Cr pour les maquettes C à E. La maquette F est, comme la maquette B, réalisée sans couche intercalaire (maquette de référence). L'assemblage de ces différentes maquettes a été réalisé dans les mêmes conditions (même cycle de CIC et de traitement thermique) que celles des maquettes A et B.

Les couches intercalaires en Ti, Cr et Si sont déposées à la surface du béryllium par PVD et elles ont chacune une épaisseur (4µm±1µm) comparable à l'épaisseur de la couche intercalaire de Nb. Chaque maquette C à F possède une couche « compliante » en cuivre pur, de type Cu-OF et dont l'épaisseur est la même que pour les maquettes A et B. Ainsi, les jonctions testées en fatigue thermique sont donc :
- Be/Si/Cu-OF/CuCrZr (maquette C),
- Be/Ti/Cu-OF/CuCrZr (maquette D),
- Be/Cr/Cu-OF/CuCrZr (maquette E),
- Be/Cu-OF/CuCrZr (maquette de référence F).

Comme pour les maquettes A et B, ces 4 maquettes ont été testés en fatigue thermique dans la même installation en utilisant les mêmes conditions de refroidissement (Le débit d'eau est de 24l/min (soit 5m/s) et sa température est celle de la température ambiante).

Seules les conditions de tests différent, puisque tous les tests ont débuté à une densité de puissance de 2,7MW/m² au lieu de 1,5MW/m² comme pour les maquettes A et B. Néanmoins, tous peuvent être comparés aux résultats d'une maquette de référence (F ou B) identique. Les résultats des tests en fatigue thermique sont présentés dans le tableau 3 ci-dessous.

**Tableau 3**

| | | | | |
|---|---|---|---|---|
| **Puissance** (MW/m²) | **2,7** | **3** | **3,2** | **3,4** |
| **Nbre de cycles Maquette C** | - | | | - |
| **Nbre de cycles Maquette D** | 91 | | | - |
| **Nbre de cycles Maquette E** | 1000 | | | 133 |
| **Nbre de cycles Maquette F** | 1000 | | | 100 |

Au cours des tests, la maquette fabriquée avec l'intercalaire de Si (maquette C) a rompu au cours de la phase de balayage indiquant le mauvais comportement en fatigue thermique d'une jonction béryllium-cuivre fabriquée avec ce type d'intercalaire.

La maquette fabriquée avec une couche intercalaire en Ti (maquette D) a rompu après seulement 91 cycles à 2.7MW/m² alors que celle fabriquée avec une couche intercalaire en Cr (maquette E) a tenu 1000 cycles à 2,7MW/m², puis rompue après 133 cycles à 3,MW/m². Ce dernier résultat est aussi bon que celui obtenu avec une maquette de référence sans intercalaire (maquette F), puisque cette dernière jonction a tenu 1000 cycles à 2,7MW/m² avant de rompre après 100 cycles à 3,4MW/m². La différence de 33 cycles entre la maquette E et la maquette F semble correspondre à la dispersion expérimentale attendue pour des essais de fatigue thermique réalisés dans ces conditions

Ces résultats indiquent donc que pour des maquettes de formes identiques et refroidies de la même manière, les couches intercalaires en Si, Ti et Cr n'apportent pas d'amélioration significative au comportement en fatigue thermique par rapport à une jonction de référence Be/Cu-OF/CuCrZr. Seul l'intercalaire de Nb, en particulier lorsqu'il est associé à une couche additionnelle en nickel pur, permet une amélioration notable de ces propriétés.

## Revendications

1. Composant de première paroi pour réacteur de fusion nucléaire muni d'un empilement comprenant successivement :
- un élément en alliage de cuivre (3),
- une couche intercalaire métallique (6) constituée de niobium et
- un élément en béryllium (4), directement en contact avec la couche intercalaire métallique (6),
**caractérisé en ce que** l'empilement comporte une couche réductrice des contraintes mécaniques (8) constituée de cuivre, disposée entre la couche intercalaire métallique (6) et l'élément en alliage de cuivre (3),
et **en ce que** l'empilement comporte une couche intercalaire additionnelle (15), constituée par un alliage de nickel et de cuivre et disposée entre la couche intercalaire métallique (6) et la couche réductrice des contraintes mécaniques.

2. Composant selon la revendication 1, **caractérisé en ce que** la couche réductrice des contraintes mécaniques (8) est en contact direct avec l'élément en alliage de cuivre (3).

3. Composant selon l'une des revendications 1 et 2, **caractérisé en ce que** l'alliage de cuivre est un alliage de cuivre, de chrome et de zirconium.

4. Composant selon l'une quelconque des revendications 1 à 3, **caractérisé en ce qu'**il comporte un élément en acier inoxydable (2) assemblé directement sur l'élément en alliage de cuivre (3).

5. Procédé de réalisation d'un composant de première paroi pour réacteur de fusion nucléaire selon l'une quelconque des revendications 1 à 4, comportant les étapes successives suivantes :
- former un empilement comprenant successivement :
- un élément en alliage de cuivre (3),
- une couche intercalaire métalliques (6) constituée de niobium et
- un élément en béryllium (4), directement en contact avec la couche intercalaire métallique (6),
- assembler l'empilement par soudage diffusion assisté par compression isostatique à chaud,
**caractérisé en ce que** l'étape d'assemblage est précédée d'une étape de mise en place d'une couche réductrice des contraintes mécaniques (8) constituée de cuivre, entre la couche intercalaire métallique (6) et l'élément en alliage de cuivre (3)
et **en ce qu'**une couche en nickel pur (12) est en outre formée sur la couche intercalaire métallique (6) de sorte que l'étape d'assemblage provoque la diffusion du nickel pur dans une partie superficielle de ladite couche réductrice des contraintes mécaniques (8), la partie superficielle de la couche réductrice des contraintes mécaniques (8) constituant après l'étape d'assemblage une couche intercalaire additionnelle (15) en alliage de cuivre et de nickel, directement en contact avec la couche intercalaire métallique (6).

6. Procédé selon la revendication 5, **caractérisé en ce que** l'élément en béryllium (4) muni de la couche intercalaire métallique (6) est assemblé directement sur l'élément en alliage de cuivre (3).

7. Procédé selon l'une des revendications 5 et 6, **caractérisé en ce que** la couche en nickel pur (12) est formée sur la couche intercalaire métallique (6) par dépôt physique en phase vapeur.

8. Procédé selon l'une quelconque des revendications 5 à 7, **caractérisé en ce que** l'étape de mise en place de la couche réductrice des contraintes mécaniques (8) comporte d'une part le report de ladite couche sur l'élément en alliage de cuivre (3) et d'autre part le report de l'élément en béryllium (4) muni de la couche intercalaire métallique (6) sur ladite couche réductrice des contraintes mécaniques (8).

9. Procédé selon l'une quelconque des revendications 5 à 8, **caractérisé en ce que** l'étape de mise en place de la couche réductrice des contraintes mécaniques (8) comporte la formation de ladite couche réductrice des contraintes mécaniques (8) directement sur l'élément en alliage de cuivre (3) et le report de l'ensemble comprenant l'élément en béryllium (4) et la couche intercalaire métallique (6) sur ladite couche réductrice des contraintes mécaniques (8).

10. Procédé selon l'une quelconque des revendications 5 à 9, **caractérisé en ce que** la couche intercalaire métallique (6) est formée par dépôt physique en phase vapeur sur l'élément en béryllium (4).

## Patentansprüche

1. Primärwandkomponente für einen Kernfusionsreaktor mit einer Schichtanordnung, die aufeinanderfolgend:
- ein Element aus Kupferlegierung (3),
- eine Metallzwischenschicht (6), die aus Niob besteht, und
- ein Berylliumelement (4), aufweist, das unmittelbar mit der Metallzwischenschicht (6) in Kontakt steht,
**dadurch gekennzeichnet, dass** die Schichtanordnung eine aus Kupfer bestehende Schicht zur Reduzierung mechanischer Spannungen (8) umfasst, die zwischen der Metallzwischenschicht (6) und dem Kupferlegierungselement (3) angeordnet ist,
und dass die Schichtanordnung eine zusätzliche Zwischenschicht (15) umfasst, die aus einer Nickel- und Kupferlegierung besteht und zwischen der Metallzwischenschicht (6) und der Schicht zur Reduzierung mechanischer Spannungen angeordnet ist.

2. Komponente nach Anspruch 1, **dadurch gekennzeichnet, dass** die Schicht zur Reduzierung mechanischer Spannungen (8) in direktem Kontakt mit dem Kupferlegierungselement (3) steht.

3. Komponente nach einem der Ansprüche 1 und 2, **dadurch gekennzeichnet, dass** die Kupferlegierung eine Legierung aus Kupfer, Chrom und Zirkonium ist.

4. Komponente nach einem der Ansprüche 1 bis 3, **dadurch gekennzeichnet, dass** sie ein Element aus Edelstahl (2) umfasst, das direkt auf dem Kupferlegierungselement (3) montiert ist.

5. Verfahren zur Herstellung einer Primärwandkomponente für einen Kernfusionsreaktor nach einem der Ansprüche 1 bis 4, mit den nachstehenden aufeinanderfolgenden Schritten:
- Bilden einer Schichtanordnung, die aufeinanderfolgend:
o ein Element aus Kupferlegierung (3),
o eine aus Niob bestehende Metallzwischenschicht (6) und
o ein Element aus Beryllium (4) umfasst, das in direktem Kontakt mit der Metallzwischenschicht (6) steht,
- Zusammenfügen der Schichtanordnung durch Diffusionsschweißen mit Hilfe von isostatischer Wärmekompression,
**dadurch gekennzeichnet, dass** dem Schritt des Zusammenfügens ein Schritt des Einsetzens einer aus Kupfer bestehenden Schicht zur Reduzierung mechanischer Spannungen (8) zwischen der Metallzwischenschicht (6) und dem Kupferlegierungselement (3) vorausgeht,
und dass außerdem eine Schicht aus reinem Nickel (12) auf der Metallzwischenschicht (6) derart ausgebildet ist, dass der Schritt des Zusammenfügens die Diffusion des reinen Nickels in einen Oberflächenabschnitt der Schicht zur Reduzierung mechanischer Spannungen (8) bewirkt, wobei der Oberflächenabschnitt der Schicht zur Reduzierung mechanischer Spannungen (8) nach dem Schritt des Zusammenfügens eine zusätzliche Zwischenschicht (15) aus einer Kupfer- und Nickellegierung bildet, die direkt in Kontakt mit der Metallzwischenschicht (6) steht.

6. Verfahren nach Anspruch 5, **dadurch gekennzeichnet, dass** das mit der Metallzwischenschicht (6) versehene Berylliumelement (4) unmittelbar auf dem Kupferlegierungselement (3) montiert wird.

7. Verfahren nach einem der Ansprüche 5 und 6, **dadurch gekennzeichnet, dass** die Schicht aus reinem Nickel (12) auf der Metallzwischenschicht (6) durch physikalischen Niederschlag in der Dampfphase gebildet wird.

8. Verfahren nach einem der Ansprüche 5 bis 7, **dadurch gekennzeichnet, dass** der Schritt des Einsetzens der Schicht zur Reduzierung mechanischer Spannungen (8) einerseits die Übertragung dieser Schicht auf das Kupferlegierungselement (3) und andererseits die Übertragung des mit der Metallzwischenschicht (6) versehenen Berylliumelements (4) auf die Schicht zur Reduzierung mechanischer Spannungen (8) umfasst.

9. Verfahren nach einem der Ansprüche 5 bis 8, **dadurch gekennzeichnet, dass** der Schritt des Einsetzens der Schicht zur Reduzierung mechanischer Spannungen (8) die Bildung dieser Schicht zur Reduzierung mechanischer Spannungen (8) unmittelbar auf dem Kupferlegierungselement (3) sowie die Übertragung der das Berylliumelement (4) und die Metallzwischenschicht (6) umfassenden Einheit auf die Schicht zur Reduzierung mechanischer Spannungen (8) beinhaltet.

10. Verfahren nach einem der Ansprüche 5 bis 9, **dadurch gekennzeichnet, dass** die Metallzwischenschicht (6) durch physikalischen Niederschlag in der Dampfphase auf dem Berylliumelement (4) gebildet wird.

## Claims

1. A nuclear fusion reactor first wall component provided with a stack successively comprising:
- a copper alloy element (3),
- an intermediate metal layer (6) formed by niobium and
- a beryllium element (4), directly in contact with the intermediate metal layer (6),
**characterized in that** the stack comprises a mechanical stress-reducing layer (8), formed by copper, arranged between the intermediate metal layer (6) and the copper alloy element (3),
and **in that** the stack comprises an additional intermediate layer (15) formed by a nickel and copper alloy and arranged between the intermediate metal layer (6) and the mechanical stress-reducing layer.

2. The component according to claim 1, **characterized in that** the mechanical stress-reducing layer (8) is in direct contact with the copper alloy element (3).

3. The component according to any one of claims 1 and 2, **characterized in that** the copper alloy is a copper, chromium and zirconium alloy.

4. The component according to any one of claims 1 to 3, **characterized in that** it comprises a stainless steel element (2) assembled directly on the copper alloy element (3).

5. A method for producing a nuclear fusion reactor first wall component according to any one of claims 1 to 4, **characterized in that** it comprises the following successive steps:
- formation of a stack comprising successively:
- an element made from copper alloy (3),
- an intermediate metal layer (6) made of niobium and
- a beryllium element (4), directly in contact with the intermediate metal layer (6),
- assembly of the stack by diffusion welding assisted by hot isostatic compression,
**characterised in that** assembly step is preceded by a step of placing a mechanical stress-reducing layer (8) formed by copper, between the intermediate metal layer (6) and the copper alloy element (3),
and **in that** a layer of pure nickel (12) is in addition formed on the intermediate metal layer (6) so that the assembly step causes diffusion of the pure nickel in a superficial part of said mechanical stress-reducing layer (8), the superficial part of the mechanical stress-reducing layer (8), after the assembly step, forming an additional intermediate layer (15) of copper and nickel alloy, directly in contact with the intermediate metal layer (6).

6. The method according to claim 5, **characterized in that** the beryllium element (4) provided with the intermediate metal layer (6) is assembled directly on the copper alloy element (3).

7. The method according to any one of claims 5 and 6, **characterized in that** the layer of pure nickel (12) is formed on the intermediate metal layer (6) by physical vapor deposition.

8. The method according to any one of claims 5 to 7, **characterized in that** the step of placing the mechanical stress-reducing layer (8) comprises on the one hand transfer of said layer onto the copper alloy element (3) and on the other hand transfer of the beryllium element (4) provided with the intermediate metal layer (6) onto said mechanical stress-reducing layer (8).

9. The method according to any one of claims 5 to 8, **characterized in that** the step of placing the mechanical stress-reducing layer (8) comprises formation of said mechanical stress-reducing layer (8) directly on the copper alloy element (3) and transfer of the assembly comprising the beryllium element (4) and the intermediate metal layer (6) onto said mechanical stress-reducing layer (8).

10. The method according to any one of claims 5 to 9, **characterized in that** the intermediate metal layer (6) is formed by physical vapor deposition on the beryllium element (4).
